# FASCICULE DE BREVET EUROPEEN

(11) **EP 3 377 367 B1**
(45) Date de publication et mention de la délivrance du brevet: **13.05.2020**
(21) Numéro de dépôt: 16805975.6
(22) Date de dépôt: 09.11.2016
(51) Int. Cl.: B60N 3/02

(54) **VEHICULE TERRESTRE DE TRANSPORT EN COMMUN, DE TYPE BUS, MUNI D'UNE BARRE DE MAINTIEN**
LANDFAHRZEUG FÜR ÖFFENTLICHEN VERKEHR WIE Z. B. BUSSE MIT EINER GRIFFSTANGE
LAND VEHICLE FOR PUBLIC TRANSPORT, SUCH AS A BUS, PROVIDED WITH A GRAB BAR

(30) Priorité: 16.11.2015 FR 1560958
(43) Date de publication de la demande: 26.09.2018
(73) Titulaire: Bluebus, 29500 Ergue Gaberic (FR)
(72) Inventeur: BESSON, Patrice, 69970 Marennes (FR); SAUVAGET, Thierry, 69780 Toussieu (FR)
(74) Mandataire: IPAZ
(86) Numéro de dépôt international: PCT/EP2016/077090
(87) Numéro de publication internationale: WO 2017/084923

(56) Documents cités:
- EP-A1- 0 769 415
- JP-A- H05 131 926
- JP-A- 2007 161 084
- JP-A- 2011 111 114
- JP-U- H0 446 936

## Description

La présente invention concerne un véhicule terrestre de transport en commun, de type bus ou tram-bus, muni d'au moins une barre de maintien verticale pour les passagers.

Le domaine de l'invention est le domaine des véhicules, en particulier des véhicules électriques, terrestres de transport en commun, de type bus, car ou tram-bus.

### Etat de la technique

Les habitacles de véhicules de transport en commun, de type bus ou tram, comprennent généralement une zone munie de sièges permettant aux utilisateurs de voyager en position assise, une zone de transport permettant aux utilisateurs de voyager en position debout, ainsi qu'un couloir longitudinal central d'accès aux sièges faisant également office de zone de transport en cas de forte affluence à l'intérieur du véhicule. La zone de transport debout permet d'augmenter la capacité en voyageurs des véhicules de transport en commun.

Cette zone de transport où les utilisateurs voyagent debout est généralement pourvue de prises permettant aux utilisateurs de s'y accrocher en vue de maintenir leur équilibre lorsque le véhicule est en mouvement. En règle générale, les prises se présentent sous la forme de barres, ou colonnes, de maintien permettant à un utilisateur de s'y agripper librement. Les barres de maintien horizontales se trouvant en hauteur sont parfois munies d'anneaux prévus pour être tenues par la main d'un utilisateur.

En outre, la fixation au plancher d'une telle barre nécessite un renforcement dudit plancher à chaque zone d'implantation d'une barre, ce qui oblige à prévoir dès la conception chaque emplacement d'une barre verticale et donc la zone renforcée associée du plancher.

Les barres de maintien verticales sont généralement fixées au plancher et éventuellement au plafond de l'habitacle du véhicule. Une telle fixation au plancher constitue un obstacle pour la circulation des utilisateurs dans l'habitacle et une gêne lors d'opérations de nettoyage de l'habitacle. De plus, une zone de fixation au plancher d'une barre de maintien est sujette à une dégradation plus rapide, ce qui peut affecter, dans le temps, l'efficacité de la fixation de la barre de maintien.

On connait également la barre de maintien fixée au plancher qui est décrite dans le document EP 2 578 447 A1. Ce document décrit une colonne de maintien fixée en une zone centrale à une paroi latérale de l'habitacle entre deux sièges. En plus de ne pas répondre au besoin initial de maintien en équilibre des utilisateurs voyageant debout, cette colonne présente une fixation peu rigide, ne permettant le maintien en équilibre que d'un nombre faible de voyageurs. On connait en outre la barre de maintient fixée en une zone de fixation supérieure et une zone de fixation inférieure à un paroi latérale de l'habitacle, qui est décrite dans le document JP 05131926. On connait également une barre de maintient fixée en sa partie haute à un rail solidaire du plafond et en sa partie basse au plancher, telle que décrite dans le document EP 0 769 415.

Un but de la présente invention est de remédier à l'ensemble de ces inconvénients.

Un autre but de l'invention est de proposer un véhicule muni d'au moins une colonne de maintien verticale plus pratique en termes de circulation et de maintenance, tout en permettant un maintien d'un grand nombre d'utilisateurs.

Il est aussi un autre but de l'invention de proposer un véhicule muni d'au moins une colonne de maintien verticale plus robuste dans le temps, tout en permettant un maintien d'un grand nombre d'utilisateurs.

### Exposé de l'invention

L'invention permet d'atteindre au moins l'un de ces buts par un véhicule terrestre de transport en commun, en particulier de type bus, comprenant un habitacle, prévu pour accueillir plusieurs personnes, et au moins une colonne, dite de maintien, verticale, disposée dans ledit habitacle et prévue pour être tenue par une ou plusieurs personnes se trouvant dans ledit habitacle lors du transport desdites personnes, caractérisé en ce que ladite colonne de maintien verticale est fixée à une même paroi latérale dudit habitacle en :
- une première zone de fixation, dite supérieure, se trouvant en partie haute de ladite paroi latérale ; et
- une deuxième zone de fixation, dite inférieure, se trouvant en partie basse de ladite paroi latérale.

Ainsi, la colonne de maintien verticale est fixée à la paroi latérale en au moins deux zones de fixation distantes l'une de l'autre, ce qui permet d'obtenir une grande rigidité de fixation et une grande résistance aux efforts, comparée par exemple à la colonne de maintien décrite dans le document EP 2 578 447 A1.

De plus, se trouvant sur une paroi latérale de l'habitacle, les fixations de la colonne de maintien sont moins soumises aux dégradations. Par conséquent, la colonne de maintien verticale du véhicule selon l'invention est plus robuste dans le temps.

En outre, n'ayant aucune fixation sur une paroi de plancher de l'habitacle du véhicule, la colonne de maintien verticale ne forme pas d'obstacle au niveau du plancher et est plus pratique à la fois pour la circulation des utilisateurs dans l'habitacle du véhicule et d'autre part pour des opérations de maintenance, en particulier pour le nettoyage du plancher de l'habitacle du véhicule.

Avantageusement, la colonne de maintien verticale peut être fixée à la paroi latérale de manière démontable au niveau de chaque zone de fixation.

Ainsi, la réparation et/ou le remplacement, ou encore le repositionnement de la colonne de maintien verticale dans l'habitacle est/sont facilité(s).

Suivant une caractéristique particulièrement avantageuse, la colonne de maintien peut être fixée, au niveau d'au moins une, en particulier de chacune, des zones de fixation, sur un profilé longitudinal se prolongeant, dans une direction longitudinale, sur au moins une partie de ladite paroi latérale.

Une telle caractéristique permet d'obtenir une colonne de maintien verticale plus flexible et personnalisable, car il est possible repositionner la colonne de maintien verticale dans le sens longitudinal de la paroi latérale, notamment en fonction du choix des emplacements des sièges dans le véhicule et des zones de transport debout des passagers.

Avantageusement, la colonne de maintien peut être munie, au niveau de chacune de ses zones de fixation, de moyens de fixation autorisant le repositionnement longitudinale de la colonne de fixation par coulissement sur/dans/autour chaque profilé longitudinal.

Les moyens de fixation autorisant un déplacement peuvent comprendre des moyens de serrage de la colonne de maintien sur/dans/autour le profilé longitudinal, tels des vis ou des boulons ou encore un levier, et qui peuvent être :
- desserrées pour autoriser le déplacement de la colonne, et
- puis resserrés.

Un tel ajustement de la position peut être réalisé par un opérateur muni d'un outil spécifique.

Alternativement, un tel repositionnement peut être réalisé de manière manuelle, par exemple à la volée, par un opérateur ou par les utilisateurs se trouvant dans l'habitacle du véhicule. Dans ce dernier cas, la colonne de maintien peut être munie de moyens de verrouillage/déverrouillage de ladite colonne sur/dans/autour chaque profilé longitudinal.

Chaque profilé longitudinal peut être un profilé horizontal, se prolongeant par exemple sur toute la longueur ou au moins les ¾ de la longueur de la paroi latérale.

Suivant une particularité préférée, au moins un desdits profilés peut faire partie de l'ossature ou du châssis du véhicule selon l'invention, ce qui permet d'éviter d'ajouter un ou des profilés au niveau de la paroi latérale.

Avantageusement, la colonne de maintien peut être fixée, au niveau de chacune des zones de fixation, sur un profilé vertical se prolongeant, dans une direction verticale, sur au moins une partie de ladite paroi latérale.

Une telle caractéristique permet d'obtenir une colonne de maintien verticale plus flexible et personnalisable car il est possible d'ajuster la hauteur de la colonne verticale.

Avantageusement, la colonne de maintien peut être munie, au niveau de chacune de ses zones de fixation, de moyens de fixation autorisant le repositionnement verticale de la colonne de fixation par coulissement sur/dans/autour le profilé vertical.

Un tel ajustement de la hauteur peut être réalisé par un opérateur muni d'un outil spécifique.

Alternativement, un tel ajustement de la hauteur peut être réalisé de manière manuelle, par exemple à la volée, par un opérateur ou par les utilisateurs se trouvant dans l'habitacle du véhicule. Dans ce dernier cas, la colonne de maintien peut être munie de moyens de verrouillage/déverrouillage de ladite colonne sur/dans/autour le profilé vertical.

Le profilé vertical peut être un profilé se prolongeant par exemple sur toute la hauteur ou au moins les ¾ de la hauteur de la paroi latérale.

Suivant une particularité préférée, le profilé vertical peut faire partie de l'ossature ou du châssis du véhicule selon l'invention, ce qui permet d'éviter d'ajouter un profilé au niveau de la paroi latérale.

Selon un exemple de réalisation particulier et nullement limitatif, la barre de maintien verticale peut comprendre au moins une barre.

Ladite au moins une barre peut être creuse, par exemple pour autoriser le passage d'au moins un câble électrique.

Ladite au moins une barre peut préférentiellement présenter une section extérieure circulaire ou arrondie.

La colonne de maintien verticale peut comporter au moins un bouton, pouvant être actionné par les utilisateurs, pour soumettre une requête lumineuse et/ou sonore à destination d'un conducteur dudit véhicule.

Suivant un mode réalisation nullement limitatif, la zone de fixation supérieure peut se trouver à une hauteur supérieure ou égale à 150cm par rapport à un plancher de l'habitacle du véhicule selon l'invention.

De plus, la zone de fixation inférieure peut se trouver à une hauteur inférieure ou égale à 50cm par rapport à un plancher de l'habitacle du véhicule selon l'invention.

Avantageusement, le véhicule selon l'invention peut comprendre au moins une barre horizontale, fixée en au moins une, en particulier chacune, de ses extrémités, sur une colonne de maintien verticale, au niveau d'une partie haute de ladite colonne de maintien verticale.

Une telle barre horizontale peut servir de prise pour les utilisateurs.

De plus, le véhicule selon l'invention peut comprendre au moins une colonne de maintien, dite intermédiaire, disposée verticale, fixée, en son extrémité supérieure sur ladite barre horizontale et en son extrémité inférieure sur une paroi latérale de l'habitacle.

### Description des figures et modes de réalisation

D'autres avantages et caractéristiques apparaîtront à l'examen de la description détaillée d'un mode de réalisation nullement limitatif, et des dessins annexés sur lesquels
- les FIGURES 1-3 sont des représentations schématiques partielles d'un véhicule selon l'invention comprenant une colonne de maintien verticale ; et
- la FIGURE 4 est une représentation schématique partielle d'un deuxième exemple de réalisation comprenant plusieurs colonnes de maintien verticales.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à de l'état de la technique antérieure. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

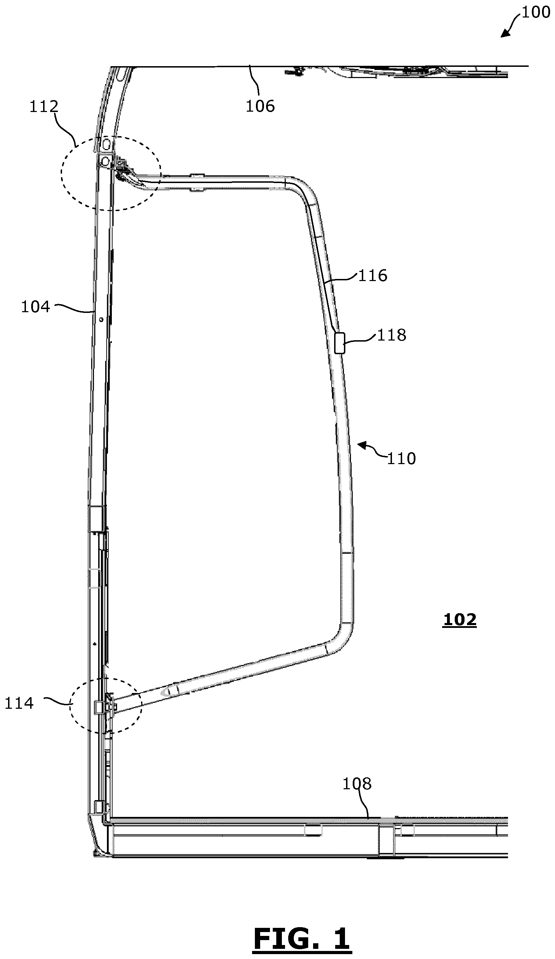

La FIGURE 1 est une représentation schématique d'un exemple de réalisation non limitatif d'un véhicule selon l'invention.

Le véhicule 100 est représenté sur la FIGURE 1, de manière très simplifiée, suivant une vue en coupe selon un plan de coupe perpendiculaire à la direction longitudinale du véhicule, en vue de faciliter la compréhension.

Le véhicule 100 comprend un habitacle 102 délimité par deux parois latérales sensiblement verticales, où seule la paroi latérale 104 est visible sur la FIGURE 1, une paroi supérieure 106, formant un plafond, et une paroi inférieure 108, formant un plancher, sensiblement horizontales. Sur la FIGURE 1, la paroi arrière, respectivement la paroi avant, délimitant l'habitacle à l'arrière, respectivement à l'avant, ne sont pas représentées.

Le véhicule 100 comprend une colonne de maintien verticale 110 agencée dans l'habitacle 102 et fixée sur la paroi latérale 104.

Plus particulièrement, la colonne de maintien 110 est fixée sur la paroi latérale 104 en une zone de fixation supérieure 112 se trouvant à distance de la paroi supérieure 106, et en particulier du plafond de l'habitacle 102. Par exemple, la zone de fixation supérieure 112 se trouve à une distance de 150cm mesurée par rapport à la paroi inférieure 108.

La colonne de maintien 110 est en outre fixée sur la paroi latérale 104 en une zone de fixation inférieure 114 se trouvant à distance de la paroi inférieure 108, et en particulier du plancher de l'habitacle 102. Par exemple, la zone de fixation inférieure 114 se trouve à une distance de l'ordre 50cm mesurée par rapport à la paroi inférieure 108.

La colonne de maintien verticale 110 est creuse au moins en partie, de sorte à laisser passer un fil de connexion électrique 116 d'un bouton 118, disposé sur la colonne de maintien verticale 110 et actionnable par l'utilisateur en vue de signaler une requête, par exemple une requête d'arrêt, une requête d'intervention, etc.

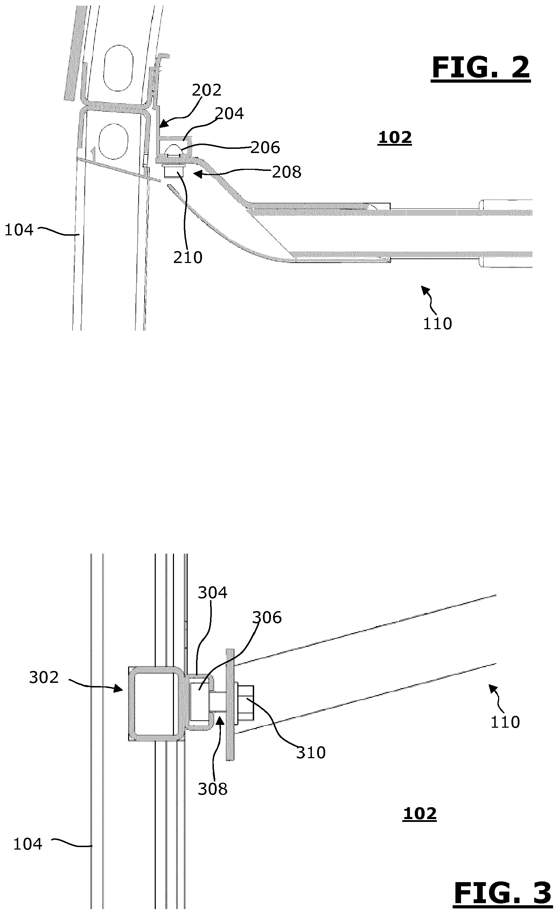

La FIGURE 2 est une représentation schématique agrandie de la zone de fixation supérieure 112.

Au niveau de la zone de fixation supérieure 112, la colonne de maintien verticale 110 est fixée à un profilé longitudinal 202, disposé sur la paroi latérale 104 et se prolongeant sur ladite paroi latérale 104, dans la direction longitudinale du véhicule, sur au moins une partie de ladite paroi latérale 104.

Plus particulièrement, la colonne de maintien verticale 110 est fixée à la paroi latérale 104, et en particulier au profilé longitudinal 202, de manière amovible ou démontable.

Pour ce faire, le profilé 202 comprend un logement longitudinal 204, se prolongeant sensiblement sur toute sa longueur, prévu pour accueillir la tête 206 d'une vis 208. La tête de vis 206 est sensiblement rectangulaire et allongée, de sorte qu'elle ne peut pas être mise en rotation dans le logement 204. La tête de vis 206 présente une largeur inférieure à la largeur du logement 204, de sorte qu'elle peut être déplacée en translation dans le logement, lorsque la vis 208 n'est pas serrée.

La vis 208 traverse une ouverture aménagée dans la colonne verticale 110 et reçoit un écrou 210 venant serrer la colonne 110 contre le profilé 202 et verrouillant ainsi la colonne 110 en position.

Comme énoncé plus haut, la colonne 110 est repositionnable le long du profilé 202. Pour ce faire, l'écrou 210 est desserré. La colonne 110 et la vis 208 sont déplacées le long du profilé 202. Pendant ce déplacement, la vis 208 reste dans le logement 204 du profilé 202 à tout moment. Une fois que la colonne 110 est dans la position souhaitée, alors l'écrou 210 est resserré, venant serrer la colonne 110 contre le profilé 202, verrouillant ainsi la colonne 110 en position.

Le profilé 202 peut être fixé à la paroi 104 par soudage ou par boulonnage.

La FIGURE 3 est une représentation schématique agrandie de la zone de fixation inférieure 114.

Au niveau de la zone de fixation inférieure 114, la colonne de maintien verticale 110 est fixée à un profilé longitudinal 302, disposé sur la paroi latérale 104 et se prolongeant sur ladite paroi latérale 104, dans la direction longitudinale du véhicule, sur au moins une partie de ladite paroi latérale 104.

Plus particulièrement, au niveau de la zone de fixation inférieure 114, la colonne de maintien verticale 110 est fixée à la paroi latérale 104, et en particulier au profilé longitudinal 302, de manière amovible ou démontable.

Pour ce faire, le profilé 302 comprend un logement longitudinal 304, se prolongeant sensiblement sur toute sa longueur, prévu pour accueillir la tête 306 d'une vis de serrage 308. La tête de vis 306 est sensiblement rectangulaire et allongée, de sorte qu'elle ne peut pas être mise en rotation dans le logement 304. La tête de vis 306 présente une largeur inférieure à la largeur du logement 304, de sorte qu'elle peut être déplacée en translation dans le logement 304, lorsque la vis 308 n'est pas serrée.

La vis 308 traverse une ouverture aménagée dans la colonne verticale 110 et reçoit un écrou 310 venant serrer la colonne 110 contre le profilé 302, et verrouillant ainsi la colonne 110 en position.

Comme énoncé plus haut, la colonne 110 est repositionnable le long du profilé 302. Pour ce faire, l'écrou 310 est desserré. La colonne 110 et la vis 308 sont déplacées le long du profilé 302. Pendant ce déplacement, la vis 308 reste dans le logement 304 du profilé 302 à tout moment. Une fois que la colonne 110 est dans la position souhaitée alors l'écrou 310 est resserré, venant serrer la colonne 110 contre le profilé 302, verrouillant ainsi la colonne 110 en position.

Le profilé 302 peut être fixé à la paroi 104 par soudage ou par boulonnage.

L'utilisation de ces moyens de fixation sur des profilés longitudinaux permet ainsi de personnaliser et de modifier à volonté la position longitudinale de la colonne verticale 110 dans l'habitacle 102.

D'une manière similaire, un profilé de fixation verticale (non représenté sur les FIGURES) peut être utilisé, en plus ou alternativement à l'utilisation des profilés longitudinaux, de sorte que la position de la colonne de maintien verticale 110 peut être modifiée et ajustée verticalement. Dans ce cas, le profilé vertical peut être disposé sur/dans la paroi latérale 104, sur ou sous les profilés longitudinaux 202 et 302.

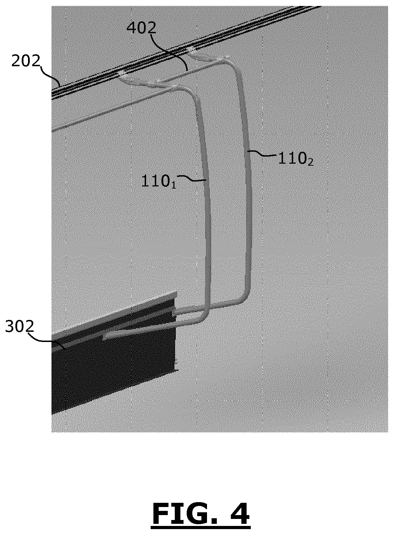

La FIGURE 4 est une représentation schématique partielle d'un deuxième exemple de réalisation comprenant plusieurs colonnes verticales 110.

Dans l'exemple représenté sur la FIGURE 4, le véhicule est muni de deux colonnes verticales 110₁ et 110₂, identique ou similaire, à la colonne verticale 110 des FIGURES 1-3, chacune fixée sur un profilé longitudinal au niveau d'une zone supérieure, par exemple le profilé 202 de la FIGURE 2, et sur un profilé longitudinal au niveau d'une zone inférieure, par exemple le profilé 302 de la FIGURE 3.

Les colonnes verticales 110₁ et 110₂ sont rejointes entre elles, au niveau de leur partie supérieure, par une barre 402, sensiblement horizontale pouvant constituer un élément de maintien horizontal pour les personnes se trouvant dans l'habitacle.

Cette barre horizontale 402 est fixée sur chacune des colonnes de maintien verticales 110₁ et 110₂ de manière repositionnable de sorte que sa hauteur peut être modifiée et ajustée à volonté.

Bien entendu, l'invention n'est pas limitée aux exemples détaillés ci-dessus. Par exemple, le véhicule selon l'invention peut comprendre au moins une colonne de maintien verticale, dite intermédiaire, dont l'extrémité supérieure est fixée à ladite barre horizontale 402 rejoignant deux colonnes de maintien verticales 110 et l'extrémité inférieure est fixée sur une paroi latérale. De plus, le véhicule selon l'invention peut en outre comprendre au moins une colonne de maintien additionnelle, verticale ou non, dont au moins une extrémité n'est pas fixée à une paroi latérale, mais sur une paroi supérieure ou inférieure du véhicule selon l'invention.

## Revendications

1. Véhicule (100) terrestre de transport en commun (100), en particulier de type bus, comprenant un habitacle (102), prévu pour accueillir plusieurs personnes, et au moins une colonne (110), dite de maintien, verticale, disposée dans ledit habitacle (102) et prévue pour être tenue par une ou plusieurs personnes se trouvant dans ledit habitacle (102) lors du transport desdites personnes, ladite colonne de maintien verticale (110) étant fixée à une même paroi latérale (104) dudit habitacle (102) en :
- une première zone de fixation (112), dite supérieure, se trouvant en partie haute de ladite paroi latérale (104) ; et
- une deuxième zone de fixation (114), dite inférieure, se trouvant en partie basse de ladite paroi latérale (104) ;
**caractérisé en ce qu'**au niveau de chacune des zones de fixation (112, 114), la colonne de maintien (110) est fixée sur un profilé longitudinal (202, 302) se prolongeant, dans une direction longitudinale, sur au moins une partie de ladite paroi latérale (104).

2. Véhicule (100) selon la revendication précédente, **caractérisé en ce que** la colonne de maintien (110) est fixée à la paroi latérale (104) de manière démontable au niveau de chaque zone de fixation (112, 114).

3. Véhicule (100) selon la revendication précédente, **caractérisé en ce que** la colonne de maintien (110) est munie, au niveau de chacune des zones de fixation (112, 114), de moyens de fixation autorisant le repositionnement longitudinale de la colonne de fixation par coulissement sur/dans/autour chaque profilé longitudinal (202, 302), lesdits moyens de fixation comprenant des moyens de serrage de ladite colonne de maintien (110) sur/dans/autour du profilé longitudinal (202, 302) et qui peuvent être :
- desserrées pour autoriser le déplacement de ladite colonne de maintien (110), et
- puis resserrés.

4. Véhicule (100) selon l'une quelconque des revendications précédentes, **caractérisé en ce qu'**au moins un, en particulier chaque, profilé longitudinal (202, 302) fait partie d'une ossature dudit véhicule (100).

5. Véhicule (100) selon l'une quelconque des revendications précédentes, **caractérisé en ce qu'**au niveau de chacune des zones de fixation (112, 114), la colonne de maintien (110) est fixée sur un profilé vertical se prolongeant, dans une direction verticale, sur au moins une partie de ladite paroi latérale.

6. Véhicule (100) selon la revendication précédente, **caractérisé en ce que** le profilé vertical fait partie d'une ossature dudit véhicule (100).

7. Véhicule (100) selon l'une quelconque des revendications précédentes, **caractérisé en ce que** la colonne de maintien (110) comprend au moins une barre creuse.

8. Véhicule (100) selon l'une quelconque des revendications précédentes, **caractérisé en ce que** la colonne de maintien (110) comporte un bouton (118) pouvant être actionné par les utilisateurs, pour soumettre une requête lumineuse et/ou sonore à destination d'un conducteur dudit véhicule (100).

9. Véhicule (100) selon l'une quelconque des revendications précédentes, **caractérisé en ce que** la zone de fixation supérieure (112) se trouve à une hauteur supérieure ou égale à 150cm par rapport à un plancher (108) de l'habitacle (102) dudit véhicule (100).

10. Véhicule (100) selon l'une quelconque des revendications précédentes, **caractérisé en ce que** la zone de fixation inférieure (114) se trouve à une hauteur inférieure ou égale à 50cm par rapport à un plancher (108) de l'habitacle (102) dudit véhicule (100).

11. Véhicule (100) selon l'une quelconque des revendications précédentes, **caractérisé en ce qu'**il comprend au moins une barre horizontale (402), fixée en au moins une, en particulier chacune, de ses extrémités, sur une colonne de maintien verticale (110₁, 110₂), au niveau d'une partie haute de ladite colonne de maintien verticale (110₁, 110₂).

12. Véhicule (100) selon la revendication précédente, **caractérisé en ce qu'**il comprend au moins une colonne de maintien, dite intermédiaire, disposée verticale, fixée, en son extrémité supérieure, sur ladite barre horizontale (402) et en son extrémité inférieure sur une paroi latérale (104) de l'habitacle.

## Patentansprüche

1. Landfahrzeug (100) des öffentlichen Verkehrs (100), insbesondere Bus, umfassend einen Innenraum (102) zur Aufnahme mehrerer Personen und mindestens eine vertikale, sogenannte Haltesäule (110), die in dem Innenraum (102) angeordnet und dafür vorgesehen ist, durch eine oder mehrere Personen gehalten zu werden, die sich in dem Innenraum (102) während der Beförderung jener Personen befinden, wobei die vertikale Haltesäule (110) an einer gleichen Seitenwand (104) des Innenraums (102) befestigt ist an:
- einem ersten, sogenannten oberen Befestigungsbereich (112), der sich im oberen Teil der Seitenwand (104) befindet; und
- einem zweiten, sogenannten unteren Befestigungsbereich (114), der sich im unteren Teil der Seitenwand (104) befindet;
**dadurch gekennzeichnet, dass** an jedem der Befestigungsbereiche (112, 114) die Haltesäule (110) auf einem Längsprofil (202, 302) befestigt ist, welches sich in einer Längsrichtung auf mindestens einem Teil der Seitenwand (104) erstreckt.

2. Fahrzeug (100) nach dem vorhergehenden Anspruch, **dadurch gekennzeichnet, dass** die Haltesäule (110) an der Seitenwand (104) an jedem Befestigungsbereich (112, 114) abnehmbar befestigt ist.

3. Fahrzeug (100) nach dem vorhergehenden Anspruch, **dadurch gekennzeichnet, dass** die Haltesäule (110) an jedem der Befestigungsbereiche (112, 114) mit Befestigungsmitteln versehen ist, welche die längsseitige Neupositionierung der Befestigungssäule durch Verschieben auf/in/um jedes Längsprofil (202, 302) erlauben, wobei die Befestigungsmittel Klemmmittel für die Haltesäule (110) auf/in/um das Längsprofil (202, 302) umfassen, und die
- gelockert werden können, um die Verlagerung der Haltesäule (110) zu erlauben, und
- anschließend wieder fest angezogen werden.

4. Fahrzeug (100) nach einem der vorhergehenden Ansprüche, **dadurch gekennzeichnet, dass** mindestens ein, insbesondere jedes Längsprofil (202, 302) Teil einer Unterkonstruktion des Fahrzeugs (100) ist.

5. Fahrzeug (100) nach einem der vorhergehenden Ansprüche, **dadurch gekennzeichnet, dass** an jedem der Befestigungsbereiche (112, 114) die Haltesäule (110) auf einem senkrechten Profil befestigt ist, welches sich in einer vertikalen Richtung auf mindestens einem Teil der Seitenwand erstreckt.

6. Fahrzeug (100) nach dem vorhergehenden Anspruch, **dadurch gekennzeichnet, dass** das vertikale Profil Teil einer Unterkonstruktion des Fahrzeugs (100) ist.

7. Fahrzeug (100) nach einem der vorhergehenden Ansprüche, **dadurch gekennzeichnet, dass** die Haltesäule (110) mindestens eine Hohlstange umfasst.

8. Fahrzeug (100) nach einem der vorhergehenden Ansprüche, **dadurch gekennzeichnet, dass** die Haltesäule (110) einen Knopf (118) umfasst, welcher durch die Benutzer betätigt werden kann, um einem Fahrer des Fahrzeugs (100) eine Licht- und/oder Tonanforderung zu stellen.

9. Fahrzeug (100) nach einem der vorhergehenden Ansprüche, **dadurch gekennzeichnet, dass** der obere Befestigungsbereich (112) sich in einer Höhe größer oder gleich 150 cm gegenüber einem Boden (108) des Innenraums (102) des Fahrzeugs (100) befindet.

10. Fahrzeug (100) nach einem der vorhergehenden Ansprüche, **dadurch gekennzeichnet, dass** der untere Befestigungsbereich (114) sich in einer Höhe kleiner oder gleich 50 cm gegenüber einem Boden (108) des Innenraums (102) des Fahrzeugs (100) befindet.

11. Fahrzeug (100) nach einem der vorhergehenden Ansprüche, **dadurch gekennzeichnet, dass** es mindestens eine horizontale Stange (402) umfasst, welche an mindestens einem, insbesondere jedem seiner Enden auf einer vertikalen Haltesäule (110₁, 110₂) an einem oberen Teil der vertikalen Haltesäule (110₁, 110₂) befestigt ist.

12. Fahrzeug (100) nach dem vorhergehenden Anspruch, **dadurch gekennzeichnet, dass** es mindestens eine sogenannte mittlere Haltesäule umfasst, die vertikal gelagert ist, an ihrem oberen Ende auf der horizontalen Stange (402) und an ihrem unteren Ende auf einer Seitenwand (104) des Innenraums befestigt ist.

## Claims

1. Public transport land vehicle (100), in particular of the bus type, comprising a passenger compartment (102), intended to accommodate several persons, and at least one vertical column (110), called support column, placed in said passenger compartment (102) and intended to be held by one or more persons located in said passenger compartment (102) during the transport of said persons, said vertical support column (110) being fixed to one and the same side panel (104) of said passenger compartment (102) in:
- a first fixing area (112), called upper fixing area, located on a top portion of said side panel (104); and
- a second fixing area (114), called lower fixing area, located on a bottom portion of said side panel (104);
**characterized in that** in each of the fixing areas (112, 114), the support column (110) is fixed to a longitudinal profile (202, 302) extending in a longitudinal direction over at least a portion of said side panel (104).

2. Vehicle (100) according to the preceding claim, **characterized in that** the support column (110) is fixed to the side panel (104) in a removable manner in each fixing area (112, 114).

3. Vehicle (100) according to the preceding claim, **characterized in that** the support column (110) is equipped, in each of the fixing areas (112, 114), with fixing means allowing the longitudinal repositioning of the support column by sliding on/in/around each longitudinal profile (202, 302), said fixing means comprising means for tightening said support column (110) on/in/around the longitudinal profile (202, 302) and which can be:
- loosened in order to allow the displacement of said support column (110), and
- then retightened.

4. Vehicle (100) according to any one of the preceding claims, **characterized in that** at least one, in particular each, longitudinal profile (202, 302) forms part of a body structure of said vehicle (100).

5. Vehicle (100) according to any one of the preceding claims, **characterized in that** in each of the fixing areas (112, 114), the support column (110) is fixed to a vertical profile extending in a vertical direction over at least a portion of said side panel.

6. Vehicle (100) according to the preceding claim, **characterized in that** the vertical profile forms part of a body structure of said vehicle (100).

7. Vehicle (100) according to any one of the preceding claims, **characterized in that** the support column (110) comprises at least one hollow bar.

8. Vehicle (100) according to any one of the preceding claims, **characterized in that** the support column (110) includes a button (118) able to be operated by the users, in order to send a light and/or sound request to a driver of said vehicle (100).

9. Vehicle (100) according to any one of the preceding claims, **characterized in that** the upper fixing area (112) is located at a height greater than or equal to 150 cm with respect to a floor (108) of the passenger compartment (102) of said vehicle (100).

10. Vehicle (100) according to any one of the preceding claims, **characterized in that** the lower fixing area (114) is located at a height less than or equal to 50 cm with respect to a floor (108) of the passenger compartment (102) of said vehicle (100).

11. Vehicle (100) according to any one of the preceding claims, **characterized in that** it comprises at least one horizontal bar (402) fixed at at least one, in particular each, of its ends to a vertical support column (110₁, 110₂), on a top portion of said vertical support column (110₁, 110₂).

12. Vehicle (100) according to the preceding claim, **characterized in that** it comprises at least one vertically placed support column, called intermediate support column, fixed at its upper end to said horizontal bar (402) and at its lower end to a side panel (104) of the passenger compartment.
